# EUROPÄISCHE PATENTSCHRIFT

(11) **EP 3 341 251 B1**
(45) Veröffentlichungstag und Bekanntmachung des Hinweises auf die Patenterteilung: **23.09.2020**
(21) Anmeldenummer: 16760646.6
(22) Anmeldetag: 29.07.2016
(51) Int. Cl.: B60T 8/32

(54) **VORRICHTUNG ZUR KRAFTSIMULATION AN EINEM BETÄTIGUNGSELEMENT EINES FAHRZEUGS, INSBESONDERE PEDALKRAFTSIMULATOR**
DEVICE FOR SIMULATING A FORCE ON AN ACTUATION ELEMENT OF A VEHICLE, IN PARTICULAR A PEDAL FORCE SIMULATOR
DISPOSITIF DE SIMULATION DE FORCE SUR UN ÉLÉMENT D'ACTIONNEMENT D'UN VÉHICULE, EN PARTICULIER SIMULATEUR DE FORCE DE PÉDALE

(30) Priorität: 24.08.2015 DE 102015216146
(43) Veröffentlichungstag der Anmeldung: 04.07.2018
(73) Patentinhaber: Schaeffler Technologies AG & Co. KG, 91074 Herzogenaurach (DE)
(72) Erfinder: BASSLER, Manuel, 77855 Achern (DE); HONSELMANN, Sebastian, 77886 Lauf (DE)
(86) Internationale Anmeldenummer: PCT/DE2016/200347
(87) Internationale Veröffentlichungsnummer: WO 2017/032367

(56) Entgegenhaltungen:
- EP-A2- 2 896 539
- WO-A1-2016/162623
- DE-A1-102008 061 569
- DE-A1-102011 016 240

## Beschreibung

Die Erfindung betrifft eine Vorrichtung zur Kraftsimulation an einem Betätigungselement eines Fahrzeugs, insbesondere Pedalkraftsimulator, mit einem Gehäuse und einem in dem Gehäuse axial verlagerbaren Kolben, wobei der Kolben über eine Kolbenstange mit dem Betätigungselement verbunden ist, und mit einem Federelement, das zumindest teilweise, insbesondere vollständig, innerhalb des Gehäuses angeordnet ist.

Es sind Betätigungssysteme bekannt, bei welchen zwischen Kupplungspedal und Kupplung keine direkte mechanische oder hydraulische Verbindung vorgesehen ist. Bei derartigen Betätigungssystemen erkennt ein Sensor im Pedal oder einem Pedalkraftsimulator die Betätigung des Pedals und steuert entsprechend das Aus- bzw. Einrücken der Kupplung. Die zum Ausrücken benötigte Kraft zur Betätigung des Kupplungspedals ist aufgrund der fehlenden gegengerichteten Kraft ausgehend von der Kupplung somit nicht mehr vorhanden. Damit die Kupplungsbetätigung für den Fahrer nicht ungewohnt erscheint, muss der Kraftverlauf bei der Betätigung des Kupplungspedals daher simuliert werden. Dies wird mit sogenannten Pedalkraftsimulatoren erreicht, die am Kupplungspedal angreifen.

Aus der nachveröffentlichten DE 10 2015 215 961 A1 ist eine Vorrichtung zur Kraftsimulation an einem Betätigungselement, wie z.B. einem Kupplungspedal, bekannt, wobei die Vorrichtung ein Gehäuse mit einem axial darin verlagerbaren Kolben umfasst. Der Kolben weist ein Kulissenbauteil mit einem sich verändernden Querschnitt auf, welcher in ein Federelement, das ebenfalls innerhalb des Gehäuses angeordnet ist, eingeschoben wird. Alternativ weist das Federelement eine sich im Querschnitt verändernde Kontur auf, in welche ein Kolbenbauteil, ggf. mit daran angebrachten Rollen, eingeschoben wird. Das Kolbenbauteil hat in diesem Fall keinen veränderlichen Querschnitt. Durch die Querschnittsänderung des Kulissenbauteils bzw. Federelements kann der Kraftverlauf bzw. die Pedalkraftkennlinie simuliert werden. Das Federelement ist hier einteilig ausgebildet und benötigt in der Herstellung einen hohen Grad an Genauigkeit und an Qualität. Insbesondere wird das Federelement durch Fräsen hergestellt. Diese Herstellung ist aufwendig und teuer.

Ferner ist aus der DE 10 2008 061 569 A1 ein Ausrücksystem für eine Reibungskupplung bekannt. Ein Geberzylinder ist hier über eine Druckleitung mit einem Nehmerzylinder verbunden. Zur Betätigung des Geberzylinders ist ein Kolben bereitgestellt, der durch ein Kupplungspedal bewegt werden kann. Der Kolben weist eine Profilierung auf, die als Kompensationsvorrichtung die von der Kupplung selber auf das Kupplungspedal rückwirkende Kraft kompensiert, bzw. variiert.

Aus der DE 10 2011 016 240 A1 ist ein Pedalkraftsimulator bekannt geworden, bei dem zwischen dem Kolben und dem Zylinder eine, eine Rückstellkraft aufbringende Feder bereitgestellt ist.

Aufgabe der Erfindung ist es, eine Vorrichtung zur Kraftsimulation an einem Betätigungselement eines Fahrzeugs anzugeben, bei der die im Stand der Technik bekannten Nachteile überwunden werden.

Erfindungsgemäß wird die Aufgabe durch eine Vorrichtung zur Kraftsimulation gemäß Patentanspruch 1 gelöst. Vorteilhafte Ausgestaltungen ergeben sich aus den Unteransprüchen.

Die Aufgabe wird durch eine Vorrichtung zur Kraftsimulation an einem Betätigungselement eines Fahrzeugs, insbesondere Pedalkraftsimulator, mit einem Gehäuse und einem in dem Gehäuse axial verlagerbaren Kolben, wobei der Kolben über eine Kolbenstange mit dem Betätigungselement verbunden ist, und mit einem Federelement, das zumindest teilweise, insbesondere vollständig, innerhalb des Gehäuses angeordnet ist, gelöst, wobei erfindungsgemäß der Kolben einen sich ändernden Querschnitt aufweist, und bei Betätigung durch das Betätigungselement in das Federelement eingreift, wobei an dem Federelement Rollkörper angeordnet sind, die mit dem Kolben in Wirkverbindung stehen und wobei das Federelement zumindest aus einem ersten und einem zweiten Federteil besteht, die miteinander verbunden sind, wobei das Kolbenelement zylindrisch ausgebildet ist und an beiden Stirnflächen eine im Wesentlichen mittige Öffnung aufweist und wobei wobei eine Öffnung zur Verbindung mit dem Kulissenbauteil dient und die andere Öffnung zur Verbindung mit der Kolbenstange dient

Die Verbindung zwischen den Federteilen kann form- und/oder kraftschlüssig erfolgen. Es wäre auch denkbar, die Verbindung stoffschlüssig herzustellen.

Durch die erfindungsgemäße Ausgestaltung des Federelements können die Federteile einzeln hergestellt werden. Dadurch wird die Herstellung vereinfacht sowie in den Kosten gesenkt.

Der Kolben umfasst erfindungsgemäß ein Kolbenelement sowie ein Kulissenbauteil, dessen Außenkontur einen sich ändernden Querschnitt aufweist, wobei an dem Federelement zwei, sich bei der Bewegung abstützende Rollkörper zum Abrollen an der Außenkontur des Kulissenbauteils angeordnet sind. In vorteilhafter Weise weist die Außenkontur des Kulissenbauteils im Wesentlichen mittig den größten Querschnitt auf. Durch die Änderung des Querschnitts wird eine Gegenkraft erzeugt, die zunächst zu- und dann wieder abnimmt, je nach dem an welcher Position der größte Querschnitt angeordnet ist. Somit wird dem Fahrer das Gefühl vermittelt, dass er die Kupplung haptisch betätigt.

In einer Ausführungsform ist das Federelement fest in dem Gehäuse positioniert. Damit wird gewährleistet, dass das Federelement sich bei der Bewegung des Kolbens nicht aus seiner vorgegebenen Position bewegt und somit eine zuverlässige Nachbildung der Kraftkennlinie gewährleistet ist. Alternativ kann aber auch der Kolben an dem Gehäuse befestigt sein und das Federelement mit dem Betätigungselement verbunden sein, wobei das Federelement bei der Betätigung durch das Fahrpedal gegen den Kolben gedrückt wird.

In einer Variante sind die Rollkörper gegenläufig ausgebildet. Damit wird verhindert, dass sie sich selbst blockieren. Die Rollkörper sind insbesondere als Nadelhülsen, Rollen oder andere Arten von Lager ausgebildet. Vorzugsweise verlaufen die, die Rollkörper tragenden Arme des Federelements im Wesentlichen parallel zueinander. Dadurch werden die Laufeigenschaften der Rollkörper begünstigt und ein Verklemmen der Rollkörper aufgrund auseinander oder zueinander laufender Arme des Federelements zuverlässig unterbunden.

In einer bevorzugten Ausführung weisen die Federteile jeweils ein erstes Ende auf, an welchen die Rollkörper angeordnet sind und jeweils ein zweites Ende auf, an denen die Federteile miteinander verbunden sind.

Bevorzugt ist zwischen den zwei Federteilen ein Abstandshalter angeordnet. Durch die Auslegung des Abstandshalters kann der Abstand zwischen den beiden Federteilen individuell eingestellt werden.

Vorzugsweise sind die zwei Federteile und der Abstandshalter im Bereich des zweiten Endes über eine stiftartige Verbindung zueinander ausgerichtet und miteinander befestigt. Hierfür weisen die Federteile im Bereich des zweiten Endes Aufnahmen, insbesondere Bohrungen, auf. Auch der Abstandshalter weist insbesondere eine Durchgangsbohrung auf.

In einer weiteren bevorzugten Ausführungsform ist die stiftartige Verbindung in Form eines Bolzens ausgebildet, der durch die zwei Federteile und den Abstandshalter durchgreift, wobei der Bolzen von außen von zumindest einem Befestigungselement gesichert ist. Der Bolzen ist dabei insbesondere im Wesentlichen senkrecht zur Mittelachse der Kolbenstange angeordnet, und durchgreift die Aufnahmen bzw. Bohrungen des Abstandshalters sowie der Federteile vollständig. Die Enden des Bolzens stehen radial außerhalb der Federteile hervor und werden in diesem Bereich mit zumindest einem Befestigungselement gesichert. Insbesondere sind zwei Befestigungselemente vorgesehen, die die Enden des Bolzens im Bereich der zweiten Enden der Federteile sichern. Die Befestigungselemente sind dabei insbesondere über eine kraftschlüssige und/oder formschlüssige Verbindung mit den Enden des Bolzens verbunden. Demnach wären z.B. Verbindungsarten, wie z.B. Schraub-, Press- oder Klebverbindungen, zwischen den Befestigungselementen und der stiftartigen Verbindung denkbar. Die stiftartige Verbindung sowie die Befestigungselemente sind insbesondere vollständig im Gehäuse angeordnet.

In einer weiteren Ausführungsform wird das Federelement axial durch ein deckeiförmiges bzw. u-förmiges Verschlusselement gehalten. Das deckelförmige Verschlusselement wird dabei insbesondere an der der Kolbenstange abgewandten Seite des Gehäuses kraft- und/oder formschlüssig mit dem Gehäuse verbunden. Die Befestigungselemente liegen dabei vorzugsweise direkt an dem deckelförmigen Verschlusselement an. Weiterhin ist in dem Verschlusselement im Wesentlichen mittig eine Öffnung vorgesehen, die entfallen kann, wenn der Deckel auf andere Weise befestigt werden kann.

In einer weiteren bevorzugten Ausführungsform sind die zwei Federteile des Federelements im Wesentlichen identisch zueinander ausgebildet. Bevorzugt werden die Federteile gestanzt. Dadurch kann die Herstellung vereinfacht sowie kostengünstiger gestaltet werden. Besonders bevorzugt handelt es sich bei dem Federelement um eine Blattfeder.

Erfindungsgemäß ist außerhalb der Kolbenstange und zumindest teilweise außerhalb des Gehäuses ein Kraftspeicher vorgesehen. Hierbei kann es sich insbesondere um eine Druckfeder handeln. Der Kraftspeicher stützt sich bevorzugt einerseits an einem an der Kolbenstange angebrachten Abstützelement oder direkt an der Kolbenstange ab sowie an einer in dem Gehäuse vorgesehenen Aufnahme. Die Anbindung des Abstützelements kann form-, kraft- oder stoffschlüssig erfolgen. Vorzugsweise kann das Abstützelement auch einteilig mit der Kolbenstange ausgebildet sein. Der Durchmesser der Aufnahme ist dabei im Wesentlichen gleich groß mit dem maximalen Durchmesser der Druckfeder. Die Anordnung der Druckfeder bzw. des Kraftspeichers außerhalb des Gehäuses hat den Vorteil, dass im Inneren des Pedalkraftsimulators mehr Platz für die Blattfeder erzeugt werden kann und diese somit stärker gestaltet werden kann.
Die Druckfeder ist mit der Kolbenstange, insbesondere direkt, verbunden.

Die Aufgabe der Erfindung kann auch durch eine Vorrichtung zur Kraftsimulation an einem Betätigungselement eines Fahrzeugs, insbesondere Pedalkraftsimulator, mit einem Gehäuse und einem in dem Gehäuse axial verlagerbaren Kolben, wobei der Kolben über eine Kolbenstange mit dem Betätigungselement verbunden ist, und mit einem Federelement, das zumindest teilweise, insbesondere vollständig innerhalb des Gehäuses angeordnet ist gelöst werden, wobei eine Innenkontur des Federelements einen sich ändernden Querschnitt aufweist, und wobei an dem Kolben Rollkörper angeordnet sind, die mit der Innenkontur des Federelements in Wirkverbindung stehen und wobei das Federelement zumindest aus einem ersten und einem zweiten Federteil besteht, die form- und/oder kraftschlüssig miteinander verbunden sind.

Die Erfindung wird nachfolgend anhand von Zeichnungen näher erläutert. Dabei zeigen:
- **Fig. 1**: eine Vorrichtung zur Kraftsimulation gemäß dem Stand der Technik in einer Schnittdarstellung
- **Fig. 2**: eine erfindungsgemäße Vorrichtung zur Kraftsimulation in einer Schnittdarstellung
- **Fig. 2a**: ein Federelement zur Anordnung in der Vorrichtung zur Kraftsimulation aus Fig. 2 in einer Schnittdarstellung

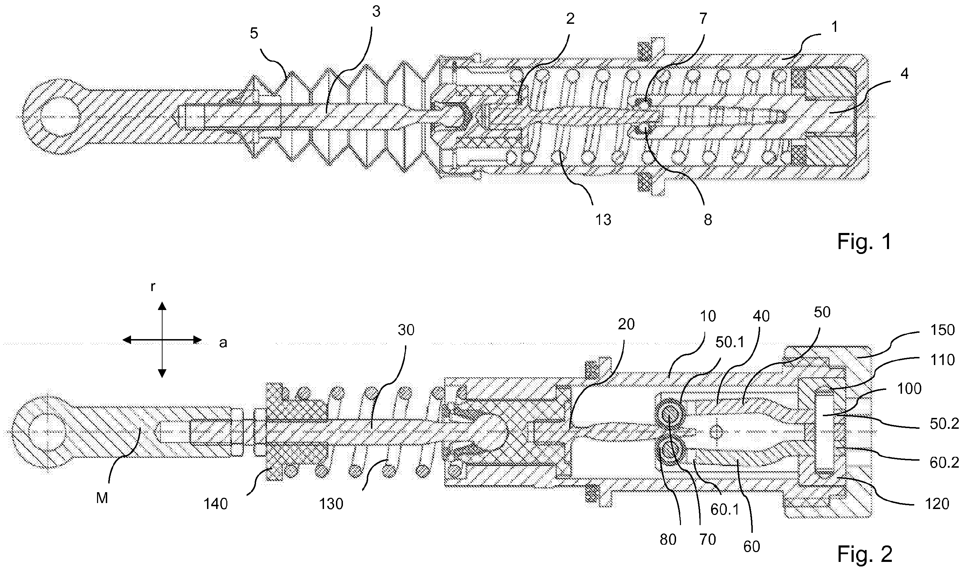

Figur 1 zeigt eine Vorrichtung zur Kraftsimulation, wie sie aus dem noch unveröffentlichten Stand der Technik bekannt ist. Die Vorrichtung weist ein Gehäuse 1 auf, innerhalb dessen sich ein Kolben 2 axial verlagern kann. Der Kolben 2 ist über eine Kolbenstange 3 mit einem Betätigungselement, wie z.B. einem Kupplungspedal, verbunden. In radialer Richtung außerhalb der Kolbenstange ist ein Schmutzschutz 5 in Form eines Faltenbalges vorgesehen. Dieser wird an der Kolbenstange 3 sowie an dem Gehäuse 1 befestigt und verhindert das Eindringen von Schmutzpartikeln in das Zylinderinnere. Die Kolbenstange 3 weist einen nicht näher bezeichneten Kolbenstangenkopf auf, der in einer Gelenkpfanne des Kolbens 2 gelagert ist. Der Kolben 2 besteht aus einem Kolbenelement sowie einem Kulissenbauteil, welche miteinander in Verbindung stehen. Das Kulissenbauteil weist einen sich verändernden Querschnitt auf und wird bei Betätigung des Betätigungselements axial in ein Federelement 4 eingeschoben.

Das Federelement 4 ist gabelförmig ausgebildet und weist zwei Federarme auf. Wie aus Figur 1 ersichtlich, ist das Federelement 4 einteilig ausgebildet und ist daher in der Herstellung aufwendig und teuer. An jedem Federarm ist ein Rollkörper 7,8 befestigt, auf welchen der Kolben 2 bei seiner Axialverschiebung abrollt. Weiterhin stützt sich innerhalb der Vorrichtung eine Feder 13 an dem Kolben 2 sowie an dem Gehäuse 1 ab. Bei Betätigung des Betätigungselements wird durch die Feder 13 sowie durch den veränderlichen Querschnitt des Kolbens 2 bzw. Kulissenbauteils eine Kraftkennlinie erzeugt, welche im Wesentlichen der Kraftkennlinie entspricht, die der Fahrer bei der Betätigung eines Kupplungspedals bei einem hydraulischen Ausrücksystem verspüren würde.

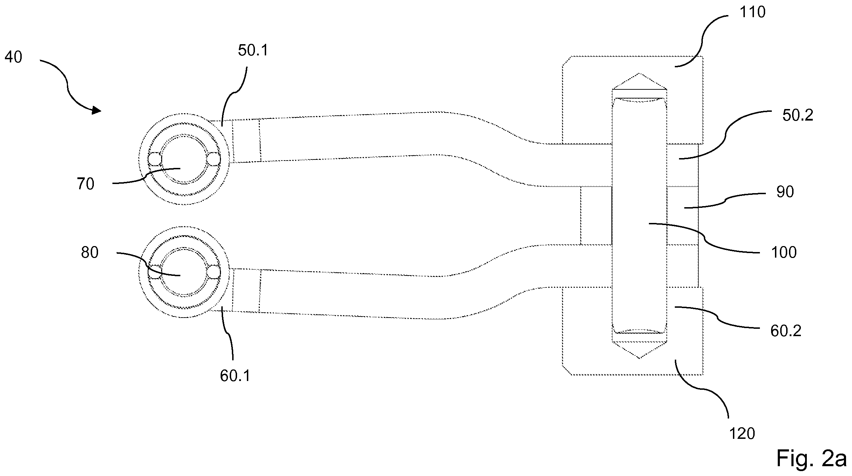

Figur 2 zeigt eine Vorrichtung zur Kraftsimulation mit einem, insbesondere einteilig, ausgebildeten Gehäuse 10. Um die Vorrichtung montagefreundlicher zu gestalten, wäre es jedoch auch denkbar, das Gehäuse 10 mehrteilig, z.B. aus zwei Teilen, zu bilden. Das zylinderförmige Gehäuse 10 ist bevorzugt aus Kunststoff gebildet. Es wäre jedoch auch denkbar, das Gehäuse 10 aus Metall herzustellen.

Innerhalb des Gehäuses 10 ist ein Kolben 20 vorgesehen. Der Kolben 20 besteht bevorzugt aus einem Kolbenelement sowie einem Kulissenbauteil. Das Kulissenbauteil weist einen veränderlichen Querschnitt auf. Der Kolben 20 ist insbesondere vollständig aus Metall gebildet. Es wäre jedoch auch denkbar, ihn teilweise oder vollständig aus einem anderen Material, wie z.B. Kunststoff herzustellen.
Das Kolbenelement ist mit dem Kulissenbauteil über eine form- und/oder stoff- und/oder kraftschlüssige Verbindung verbunden. Insbesondere wird das Kolbenelement über eine Schraubverbindung mit dem Kulissenbauteil verbunden. Es wäre jedoch auch denkbar, das Kolbenelement und das Kulissenbauteil einteilig bzw. einstückig auszubilden.

Das Kolbenelement ist zylindrisch ausgebildet und weist an beiden Stirnflächen eine im Wesentlichen mittige Öffnung auf. Die Öffnung, die zur Verbindung mit dem Kulissenbauteil dient, ist insbesondere als Stufenbohrung ausgeführt. Die weitere Öffnung des Kolbenelements dient zur Verbindung mit einer Kolbenstange 30. Das Bezugszeichen M bezeichnet die Mittelachse der Vorrichtung und verläuft axial durch die Kolbenstange 30.

Die Kolbenstange 30 weist einen Kolbenstangenkopf auf, der in einer mit oder an dem Kolbenelement angeordneten Gelenkpfanne in Wirkverbindung steht. Die Kolbenstange 30 kann aus Metall oder Kunststoff ausgebildet sein. Zur Minimierung von Verschleiß im Bereich des Kolbenstangenkopfes kann die Kolbenstange 30 eine Beschichtung oder ein verschleißarmes Aufnahmeteil aufweisen.

Der Kolben 20, insbesondere das Kolbenelement, wird durch eine radiale Erweiterung an einer Stufe an der Gehäuseinnenwand axial gesichert. Die Stufe an der Gehäuseinnenwand dient somit als Anschlag für den Kolben 20 in einer axialen Richtung a.

Weiterhin weist das Gehäuse 10 an einem der Kolbenstange 30 zugewandten Ende eine durch eine weitere Stufe in der Gehäuseinnenwand gebildete zweite Anschlagsfläche auf. Diese dient zur Abstützung eines Kraftspeichers 130, welcher insbesondere in Form einer Druckfeder ausgebildet ist. An der Kolbenstange 30 wird ein Abstützelement 140 kraft- und/oder form- und/oder stoffschlüssig angebracht. Insbesondere weist das Abstützelement 140 ein Innengewinde auf, welches mit einem Außengewinde der Kolbenstange 30 in Wirkverbindung steht. Zur axialen Sicherung ist insbesondere eine Mutter oder dgl. vorgesehen, welche das Abstützelement 140 in Position hält. Das Abstützelement weist ebenso eine durch eine radiale Erweiterung gebildete Anschlagsfläche für den Kraftspeicher 130 auf. Radial außerhalb der Kolbenstange 30 kann bevorzugt ein Schmutzschutz, z.B. in Form eines elastischen Faltenbalges, vorgesehen sein, der das Eindringen von Partikeln verhindert. Dieser Schmutzschutz (nicht gezeigt) kann an der Kolbenstange 30 und/oder dem Abstützelement 140 sowie dem Gehäuse 10 befestigt sein.

Bei Betätigung des Betätigungselements in Form eines Kupplungspedals wird somit die Kolbenstange in axialer Richtung a verschoben. Dadurch wird der zwischen dem Abstützelement 140 und der Anschlagsfläche im Gehäuse 10 angeordnete Kraftspeicher 130 komprimiert. Der Fahrer verspürt eine entgegen der Betätigungsrichtung gerichtete Gegenkraft. Durch die axiale Betätigung der Kolbenstange 30 wird der Kolben 20 ebenso axial verschoben. Dadurch wird der Kolben 20, genauer gesagt das Kulissenbauteil des Kolbens, in ein in dem Gehäuse 10 angeordnetes Federelement 40 geschoben.

Das Federelement 40 umfasst zumindest zwei Federteile 50, 60. Die Federteile 50, 60 sind insbesondere aus Metall ausgebildet und mittels Stanzen hergestellt. Die Federteile 50, 60 weisen jeweils ein erstes Ende 50.1, 60.1 und ein zweites Ende 50.2, 60.2 auf. Im Bereich ihres ersten Endes 50.1, 60.1 weisen die Federteile 50, 60 Rollkörper 70, 80 auf. Diese werden an den Innenseiten der Federteile 50, 60 befestigt zur Abstützung auf dem Kolben 20. Im Bereich ihres zweiten Endes 50.2, 60.2 sind in jedem Federteil 50, 60 Aufnahmen in Form von Bohrungen vorgesehen. Radial zwischen den Federteilen 50, 60 wird ein Abstandshalter 90 angeordnet.

Über die Ausgestaltung des Abstandshalters 90 können die Abstände zwischen den Federteilen 50, 60 eingestellt werden. Der Abstandshalter 90 weist im Wesentlichen mittig ebenso eine Aufnahme in Form einer Durchgangsbohrung auf. Die Federteile 50, 60 und der Abstandshalter 90 werden über eine stiftartige Verbindung 100, insbesondere in Form eines Bolzens, miteinander verbunden und zueinander ausgerichtet. Die stiftartige Verbindung 100 weist zwei Enden auf, die jeweils radial außerhalb der Federteile 50, 60 vorstehen. An den Enden der stiftartigen Verbindung 100 werden Befestigungselemente 110, 120 vorgesehen, welche die Federteile 50, 60 und den Abstandshalter 90 radial sichern.

An der der Kolbenstange 30 abgewandten Stirnseite des Gehäuses 10 weist die Gehäuseinnenwand eine weitere Stufe auf, die als Anschlag für die Befestigungselemente 110, 120 dient. Weiterhin wird ein deckelförmiges Verschlusselement 150 vorgesehen, welches direkt an den Befestigungselementen 110, 120 anliegt und das Gehäuse 10 verschließt. Das deckelförmige Verschlusselement 150 ist im wesentlichen u-förmig ausgebildet und umgibt das Gehäuse sowohl in radialer als auch in axialer Richtung zumindest teilweise.
Die Befestigung zwischen Verschlusselement 150 und Gehäuse 10 erfolgt bevorzugt über eine kraft- und/oder formschlüssige Verbindung. So wäre es denkbar, das Verschlusselement 150 an das Gehäuse 10 anzuschrauben.

Bei der Montage des Pedalkraftsimulators wird wie folgt verfahren:
Zunächst werden die Unterbaugruppen montiert, d.h. das Kolbenelement und das Kulissenbauteil werden miteinander verbunden. Die Verbindung zwischen der Kolbenstange 30 und dem Abstützelement 140 wird hergestellt.

Auch die Federteile 50, 60 werden mit den Rollkörpern 70, 80 versehen und über den Abstandshalter 90 und die stiftartige Verbindung 100 zueinander ausgerichtet und miteinander unter Zuhilfenahme der Befestigungselemente 110, 120 verbunden.

In einem ersten Montageschritt wird der Kolben 20 in das Gehäuse 10 eingeführt, bis dieser mit seiner radialen Erweiterung an dem Anschlag in der Gehäuseinnenwand anschlägt. Der Kraftspeicher 130 wird an die Anschlagsfläche im Gehäuse 10 angelegt und die Kolbenstange 30 samt Abstützkörper 140 wird radial innerhalb durch den Kraftspeicher 130 geschoben, bis der Kolbenstangenkopf in der Öffnung des Kolbens 20 fixiert ist.

In einem zweiten Montageschritt wird das Federelement 40 samt stiftartiger Verbindung 100 in das Gehäuse 10 geschoben, bis die Befestigungselemente 110, 120 an dem weiteren Anschlag an der Gehäuseinnenwand anschlagen. Abschließend wird das Gehäuse 10 mit dem Verschlusselement 150 verbunden.

Figur 2a zeigt das Federelement 40 der Vorrichtung zur Kraftsimulation aus Figur 2 im Detail. Es ist zu sehen, dass die Rollkörper 70, 80 im Bereich der ersten Enden 50.1, 60.1 der Federteile 50, 60 angeordnet sind und nach radial innen weisen. Bei Betätigung wird das Kulissenbauteil des Kolbens 20 in das Federelement 40 geschoben. Die Rollkörper 70, 80 kommen daher in Auflage mit der Oberfläche des Kulissenbauteils. Durch den sich ändernden Querschnitt des Kulissenbauteils, insbesondere durch die im Wesentlichen mittige Querschnittserhöhung, resultiert - zumindest kurzzeitig - eine erhöhte Gegenkraft, die der Pedalbetätigungskraft entgegen gerichtet ist. Die durch das Kulissenbauteil resultierenden Gegenkräfte addieren sich zu den durch den Kraftspeicher 130 resultierenden Gegenkräften und simulieren somit die gewünschte Kraftkennlinie für den Fahrer.

Das vorangegangene Ausführungsbeispiel betrifft eine Vorrichtung zur Kraftsimulation an einem Betätigungselement eines Fahrzeugs, insbesondere Pedalkraftsimulator, mit einem Gehäuse und einem in dem Gehäuse axial verlagerbaren Kolben, wobei der Kolben über eine Kolbenstange mit dem Betätigungselement verbunden ist, und mit einem Federelement, das zumindest teilweise, insbesondere vollständig, innerhalb des Gehäuses angeordnet ist, wobei der Kolben einen sich ändernden Querschnitt aufweist, und bei Betätigung durch das Betätigungselement in das Federelement eingreift, wobei an dem Federelement Rollkörper angeordnet sind, die mit dem Kolben in Wirkverbindung stehen und wobei das Federelement zumindest aus einem ersten und einem zweiten Federteil besteht, die form- und/oder kraftschlüssig miteinander verbunden sind.

### Bezugszeichenliste

- 1, 10: Gehäuse
- 2, 20: Kolben
- 3, 30: Kolbenstange
- 5: Schmutzschutz
- 4, 40: Federelement
- 50, 60: Federteile
- 50.1, 60.1: erstes Ende
- 50.2, 60.2: zweites Ende
- 7, 70: Rollkörper
- 8, 80: Rollkörper
- 90: Abstandshalter
- 100: stiftartige Verbindung
- 110: Befestigungselement
- 120: Befestigungselement
- 13, 130: Kraftspeicher
- 140: Abstützelement
- 150: Verschlusselement

- M: Mittelachse
- a: Axiale Richtung
- r: Radiale Richtung

## Patentansprüche

1. Vorrichtung zur Kraftsimulation an einem Betätigungselement eines Fahrzeugs, mit einem Gehäuse (10) und einem in dem Gehäuse (10) axial verlagerbaren Kolben (20), wobei der Kolben (20) aus einem Kolbenelement sowie einem Kulissenbauteil besteht und über eine Kolbenstange (30) mit dem Betätigungselement verbunden ist, und mit einem Federelement (40), das zumindest teilweise, insbesondere vollständig, innerhalb des Gehäuses (10) angeordnet ist, und wobei das Kulissenbauteil des Kolbens (20) einen sich ändernden Querschnitt aufweist, und bei Betätigung durch das Betätigungselement in das Federelement (40) eingreift, **dadurch gekennzeichnet, dass** an dem Federelement (40) Rollkörper (70, 80) angeordnet sind, die mit dem Kolben (20) in Wirkverbindung stehen und das Federelement (40) zumindest aus einem ersten und einem zweiten Federteil (50, 60) besteht, die miteinander verbunden sind, dass das Kolbenelement zylindrisch ausgebildet ist und an beiden Stirnflächen eine im Wesentlichen mittige Öffnung aufweist, wobei eine Öffnung zur Verbindung mit dem Kulissenbauteil dient und die andere Öffnung zur Verbindung mit der Kolbenstange (30) dient, und dass außerhalb der Kolbenstange und zumindest teilweise außerhalb des Gehäuses (10) ein zwischen Kolbenstange (30) und Gehäuse (10) wirkender Kraftspeicher (130) vorgesehen ist, wobei bei Betätigung des Betätigungselements die Kolbenstange in axialer Richtung (a) verschoben wird, wodurch der Kraftspeicher (130) komprimiert wird und der Fahrer eine entgegen der Betätigungsrichtung gerichtete Gegenkraft verspürt, und wobei durch die axiale Betätigung der Kolbenstange (30) der Kolben (20) ebenso axial verschoben wird, wodurch das Kulissenbauteil des Kolbens (20) in das in dem Gehäuse (10) angeordnete Federelement (40) geschoben wird und sich die durch das Kulissenbauteil resultierenden Gegenkräfte zu den durch den Kraftspeicher (130) resultierenden Gegenkräften addieren und eine gewünschte Kraftkennlinie für den Fahrer simulieren.

2. Vorrichtung zur Kraftsimulation nach Anspruch 1, **dadurch gekennzeichnet, dass** die Federteile (50, 60) jeweils ein erstes Ende (50.1, 60.1) aufweisen, an welchen die Rollkörper (70, 80) angeordnet sind und jeweils ein zweites Ende (50.2, 60.2) aufweisen, an denen die Federteile (50, 60) miteinander verbunden sind.

3. Vorrichtung zur Kraftsimulation nach Anspruch 1 oder 2, **dadurch gekennzeichnet, dass** zwischen den zwei Federteilen (50, 60) ein Abstandshalter (90) angeordnet ist.

4. Vorrichtung zur Kraftsimulation nach Anspruch 3, **dadurch gekennzeichnet, dass** die zwei Federteile (50, 60) und der Abstandshalter (90) im Bereich des zweiten Endes (50.2, 60.2) über eine stiftartige Verbindung (100) zueinander ausgerichtet und miteinander befestigt sind.

5. Vorrichtung zur Kraftsimulation nach Anspruch 4, **dadurch gekennzeichnet, dass** die stiftartige Verbindung (100) in Form eines Bolzens durch die zwei Federteile (50, 60) und den Abstandshalter (90) durchgreift und von außen von zumindest einem Befestigungselement (110, 120) gesichert ist.

6. Vorrichtung zur Kraftsimulation nach einem der Ansprüche 1 bis 5, **dadurch gekennzeichnet, dass** die zwei Federteile (50, 60) im Wesentlichen identisch ausgebildet sind.

7. Vorrichtung zur Kraftsimulation nach einem der Ansprüche 1 bis 6, **dadurch gekennzeichnet, dass** die Federteile (50, 60) gestanzt sind.

8. Vorrichtung zur Kraftsimulation nach einem der Ansprüche 1 bis 7, **dadurch gekennzeichnet, dass** der Kraftspeicher (130) in Form einer Druckfeder vorgesehen ist.

9. Vorrichtung zur Kraftsimulation nach Anspruch 8, **dadurch gekennzeichnet, dass** sich der Kraftspeicher (130) an der Kolbenstange (30) oder an einem an der Kolbenstange (30) angeordneten Abstützelement (140) und an dem Gehäuse (10) abstützt.

10. Vorrichtung zur Kraftsimulation nach einem der Ansprüche 1 bis 9, **dadurch gekennzeichnet, dass** es sich bei dem Federelement (40) um eine Blattfeder handelt.

## Claims

1. A device for simulating a force on an actuation element of a vehicle, comprising a housing (10) and a piston (20) which can be moved axially in the housing (10), wherein the piston (20) consists of a piston element and a link component and via a piston rod (30) is connected to the actuation element, and comprising a spring element (40) which is arranged at least partially, in particular completely, within the housing (10), and wherein the link component of the piston (20) has a changing cross section, and when actuated by the actuation element engages into the spring element (40), **characterised in that** roller bodies (70, 80) are arranged on the spring element (40) which are operatively connected to the piston (20), and the spring element (40) consists of at least a first and a second spring part (50, 60) which are connected to each other, that the piston element is designed to be cylindrical and comprises a substantially central opening on both end faces, wherein one opening is used for connection to the link component and the other opening is used for connection to the piston rod (30), and that outside the piston rod and at least partially outside the housing (10) an acting force accumulator (130) is provided between the piston rod (30) and the housing (10), wherein the piston rod is displaced in the axial direction (a) when the actuation element is actuated, as a result of which the energy accumulator (130) is compressed and the driver feels a counterforce directed against the actuation direction, and wherein the piston (20) is also moved axially through the axial actuation of the piston rod (30), as a result of which the link component of the piston (20) is pushed into the spring element (40) arranged in the housing (10) and the counterforces resulting from the link component are added to the counterforces resulting from the energy accumulator (130) and simulate a desired force characteristic curve for the driver.

2. The device for simulating a force according to claim 1, **characterised in that** the spring parts (50, 60) each have a first end (50.1, 60.1) on which the roller bodies (70, 80) are arranged and each have a second end (50.2, 60.2) on which the spring parts (50, 60) are connected to each other.

3. The device for simulating a force according to claim 1 or 2, **characterised in that** a spacer (90) is arranged between the two spring parts (50, 60).

4. The device for simulating a force according to claim 3, **characterised in that** the two spring parts (50, 60) and the spacer (90) in the region of the second end (50.2, 60.2) are aligned with one another and fastened to one another via a pin-like connection (100).

5. The device for simulating a force according to claim 4, **characterised in that** the pin-like connection (100) in the form of a bolt extends through the two spring parts (50, 60) and the spacer (90) and is secured from the outside by at least one fastening element (110, 120).

6. The device for simulating a force according to any one of claims 1 to 5, **characterised in that** the two spring parts (50, 60) are substantially identical.

7. The device for simulating a force according to any one of claims 1 to 6, **characterised in that** the spring parts (50, 60) are punched.

8. The device for simulating a force according to one of claims 1 to 7, **characterised in that** the force accumulator (130) is provided in the form of a compression spring.

9. The device for simulating a force according to claim 8, **characterised in that** the force accumulator (130) is supported on the piston rod (30) or on a support element (140) arranged on the piston rod (30) and on the housing (10).

10. The device for simulating a force according to any one of claims 1 to 9, **characterised in that** the spring element (40) is a leaf spring.

## Revendications

1. Dispositif de simulation de force sur un élément d'actionnement d'un véhicule, comprenant : un boîtier (10) et un piston (20) pouvant être déplacé axialement dans le boîtier (10), dans lequel ledit piston (20) se compose d'un élément piston ainsi que d'un composant coulisse et est raccordé à l'aide d'une tige de piston (30) à l'élément d'actionnement ; et un élément ressort (40), lequel est disposé au moins partiellement, en particulier complètement, à l'intérieur du boîtier (10), et dans lequel le composant coulisse du piston (20) comporte une section transversale changeante, et, lors d'un actionnement par l'élément d'actionnement, vient en prise avec l'élément ressort (40), **caractérisé en ce que** des corps roulants (70, 80) sont disposés sur l'élément ressort (40), lesquels corps roulants sont en liaison fonctionnelle avec le piston (20) et l'élément ressort (40) se compose d'au moins une première et une seconde partie de ressort (50, 60), lesquelles sont raccordées l'une à l'autre, que l'élément piston est cylindrique et comporte sur les deux faces d'extrémité une ouverture sensiblement centrale, dans lequel une ouverture sert au raccordement au composant coulisse et l'autre ouverture sert au raccordement à la tige de piston (30), et qu'à l'extérieur de la tige de piston et au moins partiellement à l'extérieur du boîtier (10), est situé un accumulateur de force (130) agissant entre la tige de piston (30) et le boîtier (10), dans lequel, lors de l'actionnement de l'élément d'actionnement, la tige de piston est déplacée dans une direction axiale (a), l'accumulateur d'énergie (130) étant ainsi comprimé et le conducteur ressentant une contre-force dirigée contre la direction d'actionnement, et dans lequel, par actionnement axial de la tige de piston (30), le piston (20) est également déplacé axialement, le composant coulisse du piston (20) étant ainsi glissé dans l'élément ressort (40) disposé dans le boîtier (10) et des contre-forces résultant du composant coulisse s'ajoutent aux contre-forces résultant de l'accumulateur de force (130) et simulent une caractéristique de force souhaitée pour le conducteur.

2. Dispositif de simulation de force selon la revendication 1, **caractérisé en ce que** les parties ressorts (50, 60) comportent respectivement une première extrémité (50.1, 60.1) au niveau de laquelle les corps roulants (70, 80) sont disposés et respectivement une seconde extrémité (50.2, 60.2) au niveau desquelles les parties ressorts (50, 60) sont raccordées l'une à l'autre.

3. Dispositif de simulation de force selon la revendication 1 ou 2, **caractérisé en ce qu'**entre les deux parties ressorts (50, 60), une entretoise (90) est disposée.

4. Dispositif de simulation de force selon la revendication 3, **caractérisé en ce que** les deux parties ressorts (50, 60) et l'entretoise (90), dans la zone de la seconde extrémité (50.2, 60.2), sont alignées l'une avec l'autre et fixées l'une à l'autre à l'aide d'un raccordement en forme de broche (100).

5. Dispositif de simulation de force selon la revendication 4, **caractérisé en ce que** le raccordement en forme de broche (100) traverse en forme de boulon les deux parties ressorts (50, 60) et l'entretoise (90) et est fixé de l'extérieur par au moins un élément de fixation (110, 120).

6. Dispositif de simulation de force selon l'une quelconque des revendications 1 à 5, **caractérisé en ce que** les deux parties ressorts (50, 60) sont essentiellement identiques.

7. Dispositif de simulation de force selon l'une quelconque des revendications 1 à 6, **caractérisé en ce que** les parties ressorts (50, 60) sont poinçonnées.

8. Dispositif de simulation de force selon l'une quelconque des revendications 1 à 7, **caractérisé en ce que** l'accumulateur de force (130) se présente sous la forme d'un ressort de compression.

9. Dispositif de simulation de force selon la revendication 8, **caractérisé en ce que** l'accumulateur de force (130) est supporté sur la tige de piston (30) ou sur un élément de support (140) disposé sur la tige de piston (30) et sur le boîtier (10).

10. Dispositif de simulation de force selon l'une quelconque des revendications 1 à 9, **caractérisé en ce que** l'élément ressort (40) est un ressort à lame.
